# EUROPÄISCHE PATENTSCHRIFT

(11) **EP 1 980 060 B1**
(45) Veröffentlichungstag und Bekanntmachung des Hinweises auf die Patenterteilung: **17.03.2010**
(21) Anmeldenummer: 06819800.1
(22) Anmeldetag: 28.11.2006
(51) Int. Cl.: H04L 12/403, H04L 12/413, H04L 25/49, H04L 1/24

(54) **VERFAHREN ZUR INFORMATIONSÜBERMITTLUNG MITTELS EIGENDIAGNOSEFÄHIGER PULSWEITENMODULATION**
METHOD FOR THE TRANSMISSION OF DATA USING SELF-DIAGNOSTIC PULSE WIDTH MODULATION
PROCEDE POUR TRANSMETTRE DES INFORMATIONS AU MOYEN D'UNE MODULATION D'IMPULSIONS EN LARGEUR APTE A L'AUTO-DIAGNOSTIC

(30) Priorität: 15.12.2005 DE 102005060025
(43) Veröffentlichungstag der Anmeldung: 15.10.2008
(73) Patentinhaber: Continental Automotive GmbH, 30165 Hannover (DE)
(72) Erfinder: KÖLLNER, Wolfgang, A-1160 Wien (AT); WASKIEWICZ, Ludwik, A-2331 Vösendorf (AT)
(86) Internationale Anmeldenummer: PCT/EP2006/068977
(87) Internationale Veröffentlichungsnummer: WO 2007/068581

(56) Entgegenhaltungen:
- EP-A- 1 443 709
- US-B1- 6 188 314

## Beschreibung

### Technisches Gebiet

Die Erfindung betrifft ein Verfahren zur Informationsübermittlung zwischen einer Master-Steuereinheit und einer Slave-Steuereinheit, wobei die Master-Steuereinheit an einem Ausgangsanschluss ein pulsweitenmoduliertes Signal ausgibt, um dieses über einen Bus an die Slave-Steuereinheit zu übertragen.

### Stand der Technik

Moderne Kraftfahrzeuge sind mit vernetzten Steuergeräten ausgestattet, zwischen denen eine Vielfalt von Informationen sowohl über den Zustand der elektrischen als auch der mechanischen Komponenten des Fahrzeugs übertragen werden. Als Übertragungsverfahren hat sich die Pulsweitenmodulation (PWM) auf Grund ihrer Einfachheit und Störunempfindlichkeit in Kraftfahrzeugen besonders bewährt hat.

Ein Anwendungsfall ist beispielsweise die Übertragung von Steuerinformationen für Lüfter- oder Pumpenmotoren, bei denen ein pulsweitenmoduliertes Steuersignal in einem Master-Steuergerät erzeugt und über einen Bus, häufig eine Eindrahtleitung an ein vom Master-Steuergerät örtlich entferntes Slave-Steuergerät übertragen wird. Die Steuergeräte beinhaltet in der Regel Mikrokontroller, die über die Funktion einer Eigendiagnose verfügen. Im Fehlerfall kann beispielsweise die Fehlermeldung von einem Slave-Steuergerät zu einem Master-Steuergerät so erfolgen, dass das Slave-Steuergerät das elektrische Potenzial auf der Leitung der Eindrahtschnittstelle während eines bestimmten Zeitraums auf Massepotenzial zieht. Das Master-Steuergerät, das den Spannungspegel auf der Eindrahtleitung ständig überwacht, erkennt dadurch den vom Slave-Steuergerät gemeldeten Fehler. Durch die Länge des Zeitraums können unterschiedliche Fehler kodiert sein, so dass das Master-Steuergerät eine auf den Fehler abgestimmte Maßnahme ergreifen kann. Eine solche Maßnahme kann beispielsweise darin bestehen, dass das gesamte System in einen sicheren Zustand gebracht wird. Wenn das Master-Steuergerät in einem übergeordneten Bus vernetzt ist, zum Beispiel in einem Controller Area Network (CAN), kann sie den Fehler an eine Anzeigeeinrichtung im Fahrgastraum signalisieren und/oder in einem Fehlerspeicher des Kraftfahrzeugs für spätere Diagnosezwecke speichern.

Von Nachteil ist hierbei, dass die Initiative vom Slave-Steuergerät ausgeht, so dass bei einem Ausfall des Slave-Steuergerätes das Master-Steuergerät ständig von einem fehlerfreien Betriebszustand des Systems ausgeht. Diese Fehlererkennung ist unbefriedigend kann je nach Art der Steuereung weit reichende Folgen haben. Fällt bei einer Motorkühlung der Lüftermotor aus, ohne dass entsprechende Gegenmaßnahmen ergriffen werden, so kann dies zu Überhitzung und ggf. zur Beschädigung der Brennkraftmaschine führen.

Die Patenschrift US 6,188,314 veröffentlicht ein Bussystem wobei eine Master-Einheit mit Slave-Einheiten Mittels PWM-Signale kommuniziert in diesem Dokument werden die von den Slave Einheiten erzeugten PWM-Signale auf dem Bus beeinflusst, und anschließend durch die Master-Einheit erfasst.

### Darstellung der Findung

Der vorliegenden Erfindung liegt die Aufgabe zu Grunde, ein Verfahren anzugeben, mit Hilfe dessen die Fehlererkennen bei einer Informationsübermittlung von einem Master-Steuergerät an eine Slave-Steuergerät durch ein pulsweitenmoduliertes Signal, besser als bisher geling.

Die Lösung dieser Aufgabe erfolgt durch ein Verfahren mit den Merkmalen des Patentanspruchs 1. Vorteilhafte Ausgestaltungen der Erfindung sind Gegenstand von abhängigen Patentansprüchen.

Gemäß der Erfindung ist eine periodische Rückmeldung vorgesehen, bei der die Slave-Steuereinheit in regelmäßigen Zeitabschnitten das von der Master-Steuereinheit ausgesandte pulsweitenmodulierte Signal beeinflusst. Oder anders ausgedrückt, das Slave-Steuergerät sendet nicht nur im Fehlerfall, sondern setzt in periodischen Zeitabschnitten eine Bestätigung, ein Quittungssignal ab. Die Initiative geht hierbei vom Slave-Steuergerät aus. Die Master-Steuereinheit beobachtet den Signalzustand am Bus durch Rücklesen des ausgegeben PWM-Signals. Sie erfasst dadurch auch das periodische Quittungssignal vom Slave-Steuergerät. Im Fehlerfall tritt das Quittungssignal am Bus nicht mehr auf und das Master-Steuergerät erkennt, dass ein Fehler bei der Informationsübermittlung bzw. Umsetzung aufgetreten ist.

Das erfindungsgemäße Verfahren weist folgende Schritte auf:
- Erzeugen eines Quittungssignals in periodischen Quittungs-Zeitintervallen durch die Slave-Steuereinheit;
- Beeinflussen des auf dem Bus übertragenen pulsweitenmodulierten Signals während des Quittungs-Zeitintervalls durch die Slave-Steuereinheit;
- Erfassen des beeinflussten pulsweitenmodulierten Signals durch die Master-Steuereinheit, wobei das am Ausgangssignalanschluss ausgegebene pulsweitenmodulierte Signal an einem Eingangssignalanschluss des Master-Steuergerät zurück gelesen wird.

Mit anderen Worten, das Quittungssignal entspricht einer Fehlerfrei-Rückmeldung. Fehlt das Quittungssignal, so geht die Mastersteuereinheit von einer fehlerbehafteten Umsetzung der übermittelten Informationen oder Daten aus und kann Maßnahmen für den Fehlerfall ergreifen. Ein besonderer Vorteil der Erfindung ergibt sich daraus, dass die bei Kraftfahrzeugen derzeit vorhandene Signalisierungsmöglichkeit für Fehler (Open-Collector-Bus-Treiberschaltung) ohne Änderung für die Erfindung genutzt werden kann. An vorhandenen KFZ-Steuergeräten ändert sich lediglich der Ablauf zur Signalisierung eines Fehlers, nicht aber die Hardware. Es muss lediglich ein neuer Algorithmus implementiert werden.

Eine Ausführungsvariante der Erfindung kann dadurch gekennzeichnet sein, dass während eines Quittungs-Zeitintervalls ein Informationsparameter zumindest eines Impulses des pulsweitenmodulierten Signals beeinflusst wird. Als Informationsparameter kann sowohl die Amplitude als auch die Dauer eines PWM-Impulses sein

In einer bevorzugten Ausbildung des Verfahrens kann vorgesehen sein, dass die Amplitude des PWM-Signals verwendet wird und durch das Quittungssignal während des Quittungs-Zeitintervalls die Amplitude nahezu vollständig unterdrückt wird. Die Erfindung lässt sich dadurch in der Praxis besonders einfach umsetzen.

Eine andere Ausbildung des Verfahrens kann so gestaltet sein, dass die Amplitude eines PWM-Impulses durch das Quittungssignal während einer Impulsdauer durch das Quittungs-Zeitintervall unterbrochen wird.

Eine besonders kostengünstige Fortbildung der Erfindung kann dadurch gekennzeichnet sein, dass der Bus durch eine einfache Eindrahtleitung gebildet wird.

Von Vorteil ist, wenn das pulsweitenmodulierte Signal von der Master-Steuereinheit kontinuierlich ausgegeben und zur Slave-Steuereinheit übertragen wird.

Eine besonders gute Zuverlässigkeit des Systems lässt sich insbesondere dann erreichen, wenn die Slave-Steuereinheit über eine Eigendiagnoseeinrichtung verfügt, durch welche sie ihren Betriebszustand selbst diagnostizieren kann. Verfügt sie auch über eine Überprüfungsmöglichkeit der von Ihr gesteuerten Last , so signalisiert das Quittungssignal der Mastersteuereinheit einen fehlerfreien Betriebszustand für die vom Master-Steuergerät stromab liegenden Systemkomponenten (Bus, Treiberschaltung, Slave-Steuereinheit und nachgeschaltet Last).

In einer besonders bevorzugten Variante kann vorgesehen sein, dass die Beeinflussung des pulsweitenmodulierten Signals so erfolgt, dass das Fehlerbild durch die Beeinflussung kodiert ist, sodass seitens der Master-Steuereinheit differenziert auf den Fehler eingegangen werden kann. Dadurch kann ein eingegrenzter Fehler zur Anzeige gebracht werden. Auf dieser Informationsgrundlage ist es für ein übergeordnetes Steuersystem leichter, das Gesamtsystem ordnungsgemäß in einen sicheren Zustand überzuführen.

### Kurzbeschreibung der Zeichnungen

Zur weiteren Erläuterung der Erfindung wird im nachfolgenden Teil der Beschreibung auf die Zeichnungen Bezug genommen in denen weitere vorteilhafte Ausgestaltungen, Einzelheiten und Weiterbildungen der Erfindung zu entnehmen sind. Es zeigen:
- Figur 1: eine Schaltungsanordnung mit einer Opern-Kollektor- Eindrahtschnittstelle, wie sie beispielsweise zur Steuerung eines Lüftermotors bei einem Kfz üblich ist;
- Figur 2: ein Impulsdiagramm eines pulsweitenmodulierten Signals;
- Figur 3: ein Signalmuster eines pulsweitenmodulierten Signals gemäß einer ersten Aufführung der Erfindung, bei der ein Impuls durch das Quittungssignal unterdrückt ist;
- Figur 4: ein Signalmuster eines pulsweitenmodulierten Signals gemäß einer zweiten Ausführungsform der Erfindung, bei der ein Impuls durch das Quittungssignal während einer Quittungszeit unterbrochen ist.

### Ausführung der Erfindung

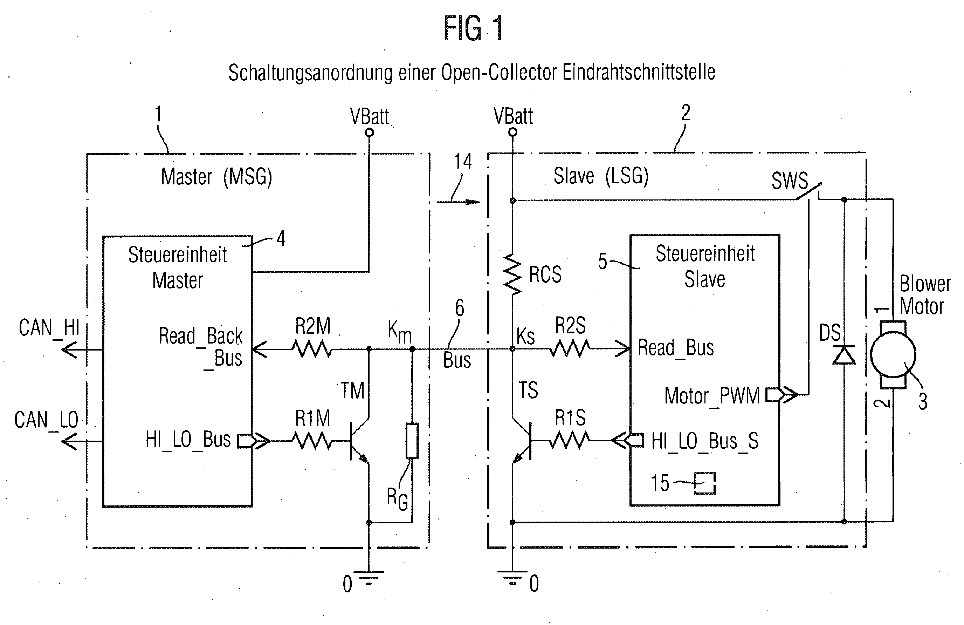

Die Figur 1 zeigt in einer schematischen Darstellung eine Schaltungsanordnung wie sie üblicherweise in einem Kraftfahrzeug zur Steuerung des Leistungsflusses bei einem Lüfter oder einer Benzinpumpe eingesetzt wird.

Ein Master-Steuergerät ("MSG") 1 bildet eine Datenquelle die über einen bidirektionalen Bus 6 mit einem Slave-Steuergerät ("LSG") 2 (Datensenke) verbunden ist. Beide Geräte 1,2 werden von der Kraftfahrzeugbatterie ("VBatt","0") versorgt. Das Slave-Steuergerät 2 steuert den Lüfter 3. Das Master-Steuergerät 1 weist eine Master-Steuereinheit 4 auf, die eingangsseitig an einen CAN-Bus (in Figur 1 Anschlüsse "CAN_HI" und "CAN_LO") angeschlossen ist. Das in der Master-Steuereinheit 1 erzeugte pulsweitenmodulierte Signal, im folgenden auch kurz PWM-Signal genannt, wird fortwährend an einem Ausgang ("HI_LO_Bus") ausgegeben und gelangt über den Widerstand "R1M" an die Basis des Transistors "TM". Der Kollektor des Transistors "TM" ist im Knoten "KM" mit dem einen Ende der Eindrahtschnittstelle 6 verbunden. Der Widerstand "RG" verbindet den Knoten "KM" mit Masse (0) der Autobatterie. Das andere Ende der Eindrahtschnittstelle 6 ist mit einem Knoten "KS" des Slave-Steuergerätes 2 und über den widerstand "RCS" mit VBatt verbunden. Es gilt RG >> RCS.

Das Slave-Steuergerät 2 weist eine Slave-Steuereinheit 5 mit einem Eingang ("Read_Bus") auf. Das pulsweitenmodulierte Signal gelangt über den Widerstand "R2S" an diesen Eingang "Read_Bus".

Die Master-Steuereinheit 4 und die Slave-Steuereinheit 5 sind Informationen verarbeitende Baugruppen, die im vorliegenden Ausführungsbeispiel als 1-Chip-Mikrokontroller ausgeführt sind und die über eine Eigendiagnoseeinrichtung 15 verfügen. Durch diese Eigendiagnoseeinrichtung 15 kann jede Baugruppe 4,5 einen sich abzeichnenden oder bereits eingetretenen Fahler erkenne und signalisieren. Diese Eigendiagnoseeinrichtung 15 ist bei Rechnersystemen an sich bekannt und braucht im Einzelnen hier nicht weiter dargestellt werden braucht.

Das auf der Eindrahtschnittstelle 6 übertragene PWM-Signal wird mit einem Tastverhältnis zwischen 10 und 90 Prozent ausgesendet, das heißt es findet fortwährend eine Informationsübermittlung von der Master-Steuereinheit 4 an die Slave-Steuereinheit 5 statt.

Wie aus der schematischen Darstellung der Figur 1 zu entnehmen ist, erzeugt die Slave-Steuereinheit 5 an einem Ausgang "Motor_PWM" ein Ansteuersignal für den HalbleiterLeistungsschalter "SWS", der den Ankerstrom des Lüftermotors 3 taktet. Dadurch wird, wie eingangs bereits erwähnt, die Leistungsaufnahme, das heißt Kühlwirkung des Motors durch die in der Pulsdauer enthaltene Information des PWM-Signals gesteuert. Im Schaltplan der Figur 1 ist dem Lüftermotor 3 eine Freilaufdiode "DS" parallel geschaltet.

Gemäß der Erfindung wird nun in periodischen Zeitabständen von der Slave-Steuereinheit 5 ein Quittungssignal, das heißt eine Fehlerfrei-Meldung erzeugt. Dieses Quittungssignal beeinflusst das pulsweitenmodulierte Signal am Bus 6. Das Master-Steuergerät 1 erfasst diese Beeinflussung, indem es entweder zeitgleich mit dem Aussenden eines Impulses des PWM-Signals oder während der Zeitdauer des Quittungssignals das Potenzial am Bus 6 zurück liest. Das Quittungssignal wird am Ausgang HI_LO_BUS-S der Slave-Steuereinheit 5 ausgegeben und gelangt über "R1S" und dem Schalttransistor "TS" an den Bus. Der im Mastersteuergerät 1 angeordnete Transistor "TM" ist in einer Open-Kollektor-Schaltung geschalten, so dass das Signal am Bus 6 durch das am Knoten "KS" anstehende Quittungssignal seitens des Slave-Steuergerätes 2 beeinflussbar ist. Im vorliegenden Beispiel bedeutet dies: Ist der Transistor "TS" durchgeschaltet, so wird das Potenzial auf der Eindrahtschnittstelle 6 auf null Volt heruntergezogen, unabhängig vom Schaltzustand des Transistors "TM".

Im Ablauf ähnelt das erfindungsgemäße Verfahren dem einer "Watchdog", wie sie bei Computersystemen üblich ist. Dort teilt die Software in regelmäßigen Abständen der "Watchdog" mit, dass sie noch ordnungsgemäß arbeitet. Im vorliegenden Fall informiert die Slave-Steuereinheit 5 die Master-Steuereinheit 1 in regelmäßig wiederkehrenden Zeitintervallen über einen Betriebszustand, der im vorliegenden Ausführungsbeispiel folgendes beinhaltet:
- Das Quittungssignal beinhaltet erstens eine Aussage über die Informationsübermittlung vom Master-Steuergerät 1 zum Slave-Steuergerät 2, das heißt eine Empfangsbestätigung über den ordnungsgemäßen Empfang des pulsweitenmodulierten Signals.
- Zweitens beinhaltet das Quittungssignal auch eine Aussage über den Funktionszustand der Slave-Steuergerätes 1, denn das Quittungssignal wird nur dann erzeugt, wenn die Slave-Steuereinheit 5 nach Durchlaufen einer Eigendiagnose-Routine ihren eigenen fehlerfreien Zustand festgestellt hat.
- Drittens wird durch das Quittungssignal der Master-Steuereinheit 4 auch signalisiert, dass die von der Slave-Steuereinheit 5 angesteuerte Last, im vorliegenden Ausführungsbeispiel der Lüftermotor 3, die vorgegebene Kühlleistung vollbringt. In Figur 1 ist die Überwachung der Kühlfunktion nicht näher dargestellt. Sie kann beispielsweise durch Sensoren, welche die Bewegung des Lüfterrades, den Motorstrom oder die Temperatur im Kühlkreislauf erfassen, erfolgen. Dadurch wird z.B. eine blockierte oder schwergängige Lüftermotorwelle erkannt.

Die Erfindung hat den großen Vorteil, dass bei der Realisierung die üblicherweise in Kraftfahrzeugen verwendete Schaltungsanordnung (Open-Collektor-Eindrahtschnittstelle in Figur 1) bei der Realisierung des erfindungsgemäßen Verfahrens beibehalten werden kann; es ist lediglich eine Änderung im Ablauf, nicht aber in der Schaltung erforderlich.

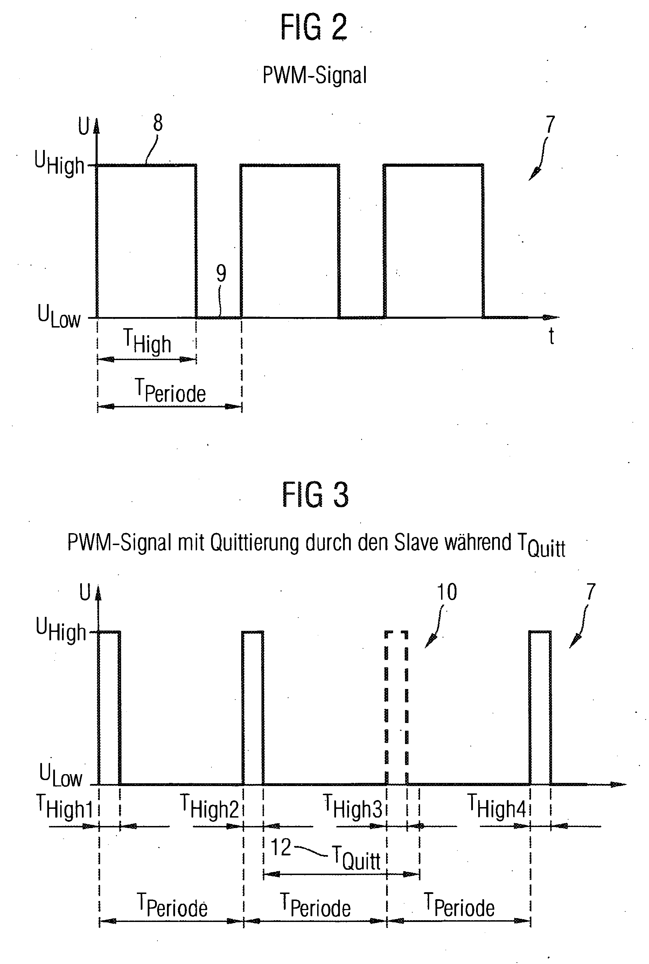

Das Quittungs-Zeitintervall ist so bemessen, dass gemäß einer ersten Ausführung des erfindungsgemäßen Verfahrens ein PWM-Impuls periodisch wiederkehrend vollständig unterdrückt wird (siehe Figur 3, fehlender "High-Impuls" 10 während der zeit "THigh3"). Diese Ausführung erfordert nur eine geringe Anforderung an die Übertragungsbandbreite zwischen den Geräten 1,2 und wird bevorzugt bei KFZ-Lüftersteuerungen eingesetzt.

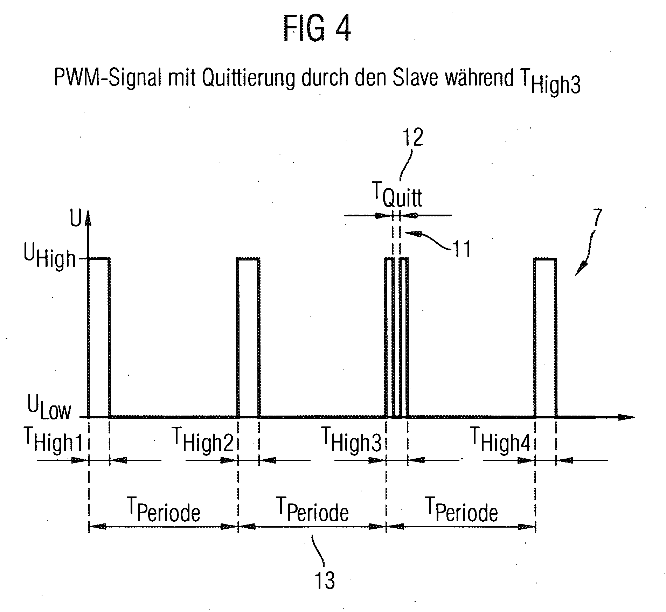

Die Beeinflussung kann aber auch darin bestehen, dass ein Impuls während periodisch wiederkehrender Quittungszeit-Intervallen unterbrochen ist (siehe Figur 4, die Zeit "THigh" eines Impulses ist während dem Quittungs-Zeitintervall "TQuitt" auf Masse gezogen). Diese Ausführungsform wird bevorzugt bei KFZ-Benzinpumpensteuerungen eingesetzt. Selbstverständlich ist es auch denkbar, dass ein anderer Signalparameter des pulsweitenmodulierten Signals, zum Beispiel die Amplitude eines Impulses nicht vollständig unterdrückt wird.

Das Erfassen des Quittungssignals durch die Master-Steuereinheit 4 erfolgt durch Zurücklesen des Spannungspegels am Bus 6. Die Master-Steuereinheit 4 weist hierfür einen Eingang "Read_Back_Bus" auf, der über den Widerstand "RZM" mit dem Knoten KM und damit mit dem Bus 6 verbunden ist.

Im Falle einer Unterbrechung der Eindrahtleitung 6 ist das von der Master-Steuereinheit 4 zurück gelesene Signal auf Massepotenzial. Auf diese Weise kann auch ein Leitungsbruch vom Master-Steuergerät 1 erfasst und zugeordnet werden. Wie bereits oben erwähnt kann das Zurücklesen entweder zeitgleich zu jedem ausgesandten PWM-Impulses erfolgen, oder während der Periode des Quittungssignals. Im letztgenannten Fall kennt der Algorithmus in der Master-Steuereinheit 4 die Periode des Quittungssignals.

Ist das Quittungssignal periodisch vorhanden, geht die Master-Steuereinheit 4 davon aus, dass die von ihr über die Pulsweitenmodulation an das Slave-Steuergerät 2 übertragenen Informationen empfangen wurden und auch korrekt in eine Kühlwirkung umgesetzt werden.

Fehlt hingegen das Quittungssignal im zurück gelesenen Signal, so geht die Master-Steuereinheit 4 von einem Fehlerzustand aus. Dieser Fehlerzustand ist zunächst nicht näher spezifiziert. Unter der Voraussetzung, dass der Bus 6 nicht unterbrochen und die Slave-Steuereinheit 5 selbst funktionsfähige ist, kann aber im weiteren Verlauf eine Differenzierung anhand der Impulsdauer des Quittungssignals erfolgen. Hierzu kodiert die Slave-Steuereinheit 5 den Fehler indem sie dem jeweils detektierten Fehler einer bestimmten Dauer des Quittungs-Zeitintervalls zuordnet. (Dabei ist die dem Fehler zugeordnete Zeit sehr viel größer als die Periodendauer des PWM-Signals). Die Master-Steuereinheit, die den Bus-Pegel und damit die dem Fehler zugeordnete Zeit zurück liest, kann den Fehler differenziert erfassen. In weiter Folge sie auf den Fehler angepasste Meldungen an den CAN_HI und CAN_LO Anschlüssen abgesetzen bzw. Gegenmaßnahmen ergreifen.

In der Figur 2 ist das auf der Eindrahtschnittstelle 6 von der Master-Steuereinheit 4 an die Slave-Steuereinheit 5 übertragene pulsweitenmodulierte Signal als Impulsdiagramm in Abhängigkeit der Zeit t dargestellt. Die Frequenz des Signals beträgt einige kHz. Das elektrische Potenzial der Impulse liegt zwischen dem Low-Spannungspegel 9 (ULow) und dem High Spannungspegel 8 (UHigh). Die übertragenen Daten d.h. Informationen sind im Tastverhältnis kodiert. Das Tastverhältnis berechnet sich aus dem Quotienten THigh/TLow. Das Tastverhältnis wird zwischen etwa 10 Prozent (Lüfterleistung ist Null) bis 90 Prozent (maximale Lüfterleistung) variiert. Dadurch ist sichergestellt, dass eine fortlaufende Datenübertragung von Master-Steuergerät 1 zum Slave-Steuergerät 2 stattfindet.

Das Signalmuster der Figur 3 zeigt in einer ersten Ausführungsform der Erfindung ein Impulsdiagramm des PWM-Signals 7 bei dem ein Impuls durch das überlagerte Quittungssignal ausgeblendet ist (strichlierter Impuls 10 in Figur 3). Die Quittungszeit ist in diesem Fall größerer als die Periodendauer TPeriode des pulsweitenmodulierten Signals 7.

Das Signalmuster der Figur 4 zeigt eine zweite Ausführungsform der Erfindung, bei der das Quittungssignal einen Impuls 11 des PWM-Signals 7 so beeinflusst, dass dieser in der High-Phase während der Quittungszeit 12 (TQuitt) unterbrochen wird. In diesem Fall ist die Quittungszeit TQuitt kleiner als THigh.

Für den Fachmann ist klar, dass das Quittungssignal das PWM-Signal 7 auch anderes als in Figur 3 oder 4 dargestellt beeinflussen kann. Beispielsweise ist denkbar, dass diese Beeinflussung darin bestehen, dass das Quittungssignal die Pulsamplitude entsprechend dem Fehlerbild verändert. Selbstverständlich können die beiden Steuereinheiten 4,5 auch anderes, zum Beispiel durch ASIC-Bausteine realisiert sein. Fernern ist bei geeigneter Adressierung denkbar, dass mehrere Datensenken an den Bus geschalten sind.

Der Bus 6 besteht im vorliegenden Beispiel aus einer einzelnen Leitung. Selbstverständlich ist das erfindungsgemäße Verfahren nicht auf einen bestimmten Bus eingeschränkt, sondern der Bus 6 ist allgemein als Kommunikationskanal zwischen den Steuereinheiten 4,5 anzusehen, der auch anders realisiert sein kann.

### Zusammenstellung der verwendeten Bezugszeichen

- 1: Master-Steuergerät
- 2: Slave-Steuergerät
- 3: Lüfter
- 4: Master-Steuereinheit
- 5: Slave-Steuereinheit
- 6: Eindrahtschnittstelle
- 7: PWM-Signal
- 8: High-Pegel des PWM-Signals
- 9: Low-Pegel des PWM-Signals
- 10: Quittungssignal in Form eines unterdrückten High-Pegels
- 11: Quittungssignal in Form eines unterbrochenen High-Pegels
- 12: Quittungs-Zeitintervall
- 13: Periodendauer des PWM-Signals
- 14: Pfeil
- 15: Eigendiagnoseeinrichtung

## Patentansprüche

1. Verfahren zur Informationsübermittlung zwischen einer Master-Steuereinheit und einer Slave-Steuereinheit, wobei die Master-Steuereinheit (4) an einem Ausgangsanschluss (HI_LO_BUS) ein pulsweitenmoduliertes Signal (7) ausgibt, um dieses über einen Bus (6) an die Slave-Steuereinheit (5) zu übertragen, **gekennzeichnet durch** folgende Schritte:
- Erzeugen eines Quittungssignals in periodischen Quittungs-Zeitintervallen (TQuitt) **durch** die Slave-Steuereinheit (5);
- Beeinflussen des auf dem Bus (6) übertragenen pulsweitenmodulierten Signals (7) während des Quittungs-Zeitintervalls (TQuitt) **durch** die Slave-Steuereinheit (5) ;
- Erfassen des beeinflussten pulsweitenmodulierten Signals (7) **durch** die Master-Steuereinheit (4), wobei das am Ausgangssignalanschluss (HI_LO_BUS) ausgegebene pulsweitenmodulierte Signal (7) an einem Eingangssignalanschluss (Read_Back_Bus) der Master-Steuereinheit (4) zurück gelesen wird.

2. Verfahren nach Anspruch 1, **dadurch gekennzeichnet, dass** während des Quittungs-Zeitintervalls ein Informationsparameter zumindest eines Impulses des pulsweitenmodulierten Signals beeinflusst wird.

3. Verfahren nach Anspruch 2, **dadurch gekennzeichnet, dass** als Informationsparameter die Amplitude des zumindest einen Impulses gewählt wird und das Quittungssignal während des Quittungs-Zeitintervalls die Amplitude nahezu vollständig unterdrückt (Fig. 3).

4. Verfahren nach Anspruch 2, **dadurch gekennzeichnet, dass** als Informationsparameter des zumindest einen Impulses die Impulsdauer gewählt wird und durch das Quittungssignal verändert wird.

5. Verfahren nach Anspruch 4, **dadurch gekennzeichnet, dass** die Impulsdauer durch das Quittungssignal entsprechend dem Quittungs-Zeitintervall verkürzt wird.

6. Verfahren nach Anspruch 4, **dadurch gekennzeichnet, dass** der Impuls durch das Quittungssignal während des Quittungs-Zeitintervalls unterbrochen wird (Fig. 4).

7. Verfahren nach einem der Ansprüche 1 bis 6, **dadurch gekennzeichnet, dass** der Bus (6) durch eine Eindrahtleitung gebildet wird.

8. Verfahren nach einem der Ansprüche 1 bis 7, **dadurch gekennzeichnet, dass** das pulsweitenmodulierte Signal (7) von der Master-Steuereinheit (4) kontinuierlich ausgegeben wird.

9. Verfahren nach einem der Ansprüche 1 bis 8, **dadurch gekennzeichnet, dass** die Slave-Steuereinheit (5) über eine Eigendiagnoseeinrichtung (15) verfügt, durch welche ein Fehlerfreizustand der Slave-Steuereinheit (5) feststellbar ist.

10. Verfahren nach Anspruch 7, **dadurch gekennzeichnet, dass** die Slave-Steuereinheit (5) das pulsweitenmodulierte Signal an einem Eingangseinschluss (Read_Bus) einliest und das Quittungssignal an einem Ausgangsanschluss (High_Low_Bus-S) ausgibt.

11. Verfahren nach Anspruch 10, **dadurch gekennzeichnet, dass** zur Ausgabe des Quittungssignals eine Schaltungsanordnung verwendet wird, die ausgangsseitig mit dem Bus (6) und eingangsseitig mit dem Ausgangsanschluss (High_Low_Bus-S) der Slave-Steuereinheit (5) verbunden ist.

12. Verfahren nach Anspruch 8, **dadurch gekennzeichnet, dass** die Slave-Steuereinheit im Fall des erkannten Fehlerfreizustandes ein Quittungssignal ausgibt, bei dem das Quittungs-Zeitintervall diskret einem Fehlerbild zugeordnet wird, wobei das Fehlerbild zuvor von der Slave-Steuereinheit (5) ermittelt wurde.

13. Verfahren nach einem der vorstehenden Ansprüche, **dadurch gekennzeichnet, dass** das pulsweitenmodulierte Signal mit einem Tastverhältnis (THigh/TPeriode) von etwa 10 Prozent bis 90 Prozent ausgegeben wird.

14. Verfahren nach einem der vorstehenden Ansprüche, **dadurch gekennzeichnet, dass** das Zurücklesen des pulsweitenmodulierten Signals simultan bei jeder Ausgabe eines Impulses des pulsweitenmodulierten Signals durchgeführt wird.

15. Verfahren nach einem der vorstehenden Ansprüche, **dadurch gekennzeichnet, dass** das Zurücklesen des pulsweitenmodulierten Signals simultan zur Ausgabe eines Quittungssignals durchgeführt wird.

16. Verfahren nach einem der vorstehenden Ansprüche, **dadurch gekennzeichnet, dass** das Master-Steuergerät an einen übergeordneten Bus, besonders bevorzugt einem CAN-Bus angeschlossen ist und über diesen eine Fehlermeldung an einem Anzeigefeld im Fahrgastraum zur Anzeige bringt und / oder in einem Fehlerspeicher speichert.

## Claims

1. Method for the transmission of data between a master control unit and a slave control unit, with the master control unit (4) outputting a pulse width-modulated signal (7) at an output terminal (HI_LO_BUS) in order to transmit the same to the slave control unit (5) via a bus (6), **characterised by** the following steps:
- slave control unit (5) generates an acknowledgement signal at periodic acknowledgement intervals (TQuitt);
- the slave control unit (5) influences the pulse width-modulated signal (7) transmitted on the bus (6) during the acknowledgement interval (TQuitt);
- the master control unit (4) detects the influenced pulse width-modulated signal (7), with the pulse width-modulated signal (7) output at the output signal terminal (HI_LO_BUS) being read back at an input signal terminal (Read_Back_Bus) of the master control unit (4).

2. Method according to claim 1, **characterised in that** an information parameter of at least one pulse of the pulse width-modulated signal is influenced during the acknowledgement interval.

3. Method according to claim 2, **characterised in that** the amplitude of the at least one pulse is selected as an information parameter and the acknowledgement signal almost completely suppresses the amplitude during the acknowledgement interval (Fig. 3).

4. Method according to claim 2, **characterised in that** the pulse duration is selected as an information parameter of the at least one pulse and is changed by the acknowledgment signal.

5. Method according to claim 4, **characterised in that** the pulse duration is shortened by the acknowledgement signal in accordance with the acknowledgment interval.

6. Method according to claim 4, **characterised in that** the pulse is interrupted by the acknowledgment signal during the acknowledgment interval (Fig. 4).

7. Method according to one of claims 1 to 6, **characterised in that** the bus (6) is formed by a single-wire line.

8. Method according to one of claims 1 to 7, **characterised in that** the pulse width-modulated signal (7) is output continuously by the master control unit (4).

9. Method according to one of claims 1 to 8, **characterised in that** the slave control unit (5) has a self-diagnostic device (15), by means of which a fault-free state of the slave control unit (5) can be determined.

10. Method according to claim 7, **characterised in that** the slave control unit (5) reads the pulse width-modulated signal at an input terminal (Read_Bus) and outputs the acknowledgment signal at an output terminal (High_Low_Bus-S).

11. Method according to claim 10, **characterised in that** a circuit arrangement is used to output the acknowledgment signal, said circuit arrangement being connected on the output side to the bus (6) and on the input side to the output terminal (High_Low_Bus-S) of the slave control unit (5).

12. Method according to claim 8, **characterised in that** the slave control unit outputs an acknowledgement signal in the event of the identified fault-free state, in which the acknowledgement interval is discretely assigned to a fault image, with the fault image having been determined previously by the slave control unit (5).

13. Method according to one of the preceding claims, **characterised in that** the pulse width-modulated signal is output with a pulse duty factor (Thigh/TPeriode) of approximately 10 percent to 90 percent.

14. Method according to one of the preceding claims, **characterised in that** the reading-back of the pulse width-modulated signal is implemented simultaneously with each output of a pulse of the pulse width-modulated signal.

15. Method according to one of the preceding claims, **characterised in that** the reading-back of the pulse width-modulated signal is implemented simultaneously in order to output an acknowledgement signal.

16. Method according to one of the preceding claims, **characterised in that** the master control device is connected to a superordinate bus, particularly preferably a CAN bus, and via this bus displays a fault message on a display panel in the passenger compartment and/or stores it in a fault storage device.

## Revendications

1. Procédé pour transmettre des informations entre une unité de commande maître et une unité de commande esclave, l'unité de commande maître (4) émettant sur une borne de sortie (HI_LO_Bus) un signal (7) modulé en largeur d'impulsions afin de transmettre ce dernier à l'unité de commande esclave (5) par l'intermédiaire d'un bus (6), ce procédé étant **caractérisé par** les étapes suivantes :
- au moyen de l'unité de commande esclave (5), engendrer un signal de quittance à des intervalles de temps périodique de quittance (TQuitt) ;
- pendant l'intervalle de temps de quittance (TQuitt), agir au moyen de l'unité de commande esclave (5) sur le signal (7) modulé en largeur d'impulsions transmis sur le bus (6) ;
- au moyen de l'unité de commande maître (4), recevoir le signal (7) modulé en largeur d'impulsions ayant subi l'action, le signal (7) modulé en largeur d'impulsions émis sur la borne de sortie de signal (HI_LO_BUS) étant lu en retour sur une borne d'entrée de signal (Read_Back_Bus) de l'unité de commande maître (4).

2. Procédé selon la revendication 1, **caractérisé en ce que** pendant l'intervalle de temps de quittance, on agit sur un paramètre d'information d'au moins une impulsion du signal modulé en largeur d'impulsions.

3. Procédé selon la revendication 2, **caractérisé en ce qu'**en tant que paramètre d'information, on choisit l'amplitude de l'au moins une impulsion et **en ce que** le signal de quittance affaiblit presque complètement cette amplitude au cours de l'intervalle de temps de quittance (Fig.3).

4. Procédé selon la revendication 2, **caractérisé en ce qu'**en tant que paramètre d'information de ladite au moins une impulsion, on choisit la durée d'impulsion et **en ce que** cette durée est modifiée par le signal de quittance.

5. Procédé selon la revendication 4, **caractérisé en ce que** la durée d'impulsion est raccourcie par le signal de quittance en fonction de l'intervalle de temps de quittance.

6. Procédé selon la revendication 4, **caractérisé en ce que** l'impulsion est interrompue par le signal de quittance au cours de l'intervalle de temps de quittance (Fig.4).

7. Procédé selon l'une des revendications 1 à 6, **caractérisé en ce que** le bus (6) est constitué par un conducteur monofilaire.

8. Procédé selon l'une des revendications 1 à 7, **caractérisé en ce que** le signal (7) modulé en largeur d'impulsions est émis en continu par l'unité de commande maître (4).

9. Procédé selon l'une des revendications 1 à 8, **caractérisé en ce que** l'unité de commande esclave (5) dispose d'un dispositif d'autodiagnostic (15) qui peut constater un état dépourvu de défaut de l'unité de commande esclave (5).

10. Procédé selon la revendication 7, **caractérisé en ce que** l'unité de commande esclave (5) lit le signal modulé en largeur d'impulsions sur une borne d'entrée (Read_Bus) et émet le signal de quittance sur une borne de sortie (High_Low_Bus-S).

11. Procédé selon la revendication 10, **caractérisé en ce que** pour l'émission du signal de quittance, on utilise un circuit qui, côté sortie, est connecté au bus (6) et qui, côté entrée, est connecté à la borne de sortie (High_Low_Bus-S) de l'unité de commande esclave (5).

12. Procédé selon la revendication 8, **caractérisé en ce que** dans le cas où est constaté un état dépourvu de défaut, l'unité de commande esclave émet un signal de quittance pour lequel on associe de façon discrète à l'intervalle de temps de quittance une image de défaut qui a été préalablement fournie par l'unité de commande esclave (5).

13. Procédé selon l'une des revendications précédentes, **caractérisé en ce que** le signal modulé en largeur d'impulsions est émis avec un rapport d'impulsion (THigh/Tperiode) d'environ 10% à 90%.

14. Procédé selon l'une des revendications précédentes, **caractérisé en ce que** la lecture en retour du signal modulé en largeur d'impulsions est réalisée simultanément à chaque émission d'une impulsion de ce signal.

15. Procédé selon l'une des revendications précédentes, **caractérisé en ce que** la lecture en retour du signal modulé en largeur d'impulsions est réalisée simultanément à chaque émission d'un signal de quittance.

16. Procédé selon l'une des revendications précédentes, **caractérisé en ce que** l'unité de commande maître est raccordée à un bus maître, en particulier un bus CAN, et **en ce que** par l'intermédiaire de ce bus, elle provoque l'affichage d'un avertissement de défaut dans l'habitacle et/ou sa mémorisation dans une mémoire de défauts.
